# EUROPÄISCHE PATENTSCHRIFT

(11) **EP 1 157 226 B1**
(45) Veröffentlichungstag und Bekanntmachung des Hinweises auf die Patenterteilung: **02.05.2003**
(21) Anmeldenummer: 00903675.7
(22) Anmeldetag: 09.02.2000
(51) Int. Cl.: F16H 63/30

(54) **BETÄTIGUNGSELEMENT FÜR EIN ZAHNRÄDERWECHSELGETRIEBE**
ACTUATING ELEMENT FOR A STRAIGHT-TOOTHED GEARBOX
ELEMENT D'ACTIONNEMENT POUR UNE BOITE DE VITESSES

(30) Priorität: 27.02.1999 DE 19908570
(43) Veröffentlichungstag der Anmeldung: 28.11.2001
(73) Patentinhaber: INA-Schaeffler KG, 91074 Herzogenaurach (DE)
(72) Erfinder: WOLFF, Valentin, F-67510 Wingen (FR)
(86) Internationale Anmeldenummer: EP0001018
(87) Internationale Veröffentlichungsnummer: WO00052361

(56) Entgegenhaltungen:
- EP-A- 0 332 442
- DE-A- 4 432 382
- US-A- 4 320 670

## Beschreibung

### Gebiet der Erfindung

Das Betätigungselement ist Bestandteil einer inneren Getriebeschaltung, mit der ein Gangwechsel erfolgt, der durch die Bewegung des vorzugsweise manuell zu betätigenden Schalthebels ausgelöst wird. Die Erfindung bezieht sich auf ein Betätigungselement, bestehend aus mehreren metallischen Bauteilen, wie eine Schaltwelle oder Schaltstange, an der zumindest ein Mitnehmer, beispielsweise eine Schaltgabel drehstarr angeordnet ist.

### Hintergrund der Erfindung

Der Aufbau bekannter Betätigungselemente sieht vor, daß der beispielsweise aus Blech geformte Mitnehmer durch eine Schweißverbindung unlösbar mit der Schaltwelle bzw. der Schaltstange verbunden ist. Durch die Schweißverbindung wird die Welle stark erhitzt mit der Gefahr einer unzulässigen Verformung. Gleichzeitig eignet sich die Schweißverbindung nicht für eine vergütete bzw. eine Welle, die mit einem Korrosionsschutz versehen ist. Außerdem muß bei der Werkstoffauswahl für die Schaltwelle auf deren Schweißbarkeit geachtet werden.

Zur Vermeidung dieser Schweißverbindung kann der Mitnehmer mit der Schaltwelle bzw. der Schaltstange alternativ durch eine Nietung verbunden werden. Dazu wird die Welle und deren Mitnehmer aufgebohrt und der Niet gegenüber vom Nietkopf verstemmt oder verbördelt. Eine derartige Befestigung zeigt die FR-A 24 39 339 in Figur 4. Durch diese Verbindung ist keine dauerhafte vorgespannte Befestigung des Mitnehmers an der Schaltwelle bzw. der Schaltstange erzielbar. Bei hohen Übertragungskräften bzw. Übertragungsmomenten besteht die Gefahr, daß sich die Nietverbindung lockert und damit eine exakte Schaltung nicht gewährleistet bzw. gefährdet ist.

Die gadtungsbildende US 4 320 670 A offenbart eine Schaltnelle, die mit einem Mitnehmer durch eine Verstiftgung zusammengefügt nird.

### Aufgabe der Erfindung

Die Nachteile bekannter Befestigungen berücksichtigend ist es Aufgabe der vorliegenden Erfindung, eine Befestigung für die Bauteile vorzusehen, die unabhängig von dem Werkstoff der Schaltstange bzw. der Schaltwelle und unter Beibehaltung der Formgebung eine dauerfeste Verbindung sicherstellt

### Zusammenfassung der Erfindung

Die zuvorgenannte Problemstellung wird durch die Merkmale des Anspruch 1 gelöst. Bei der erfindungsgemäß vorgesehenen Verschweißung wird das Schaftende der Verstifung zunächst erhitzt, die zu einer Längendehnung führt. Bei dem Erkalten verkürzt sich die Verstiftung, wobei die sich einstellende Stiftlänge aufgrund des stoffschlüssig mit dem Mitnehmer verbundenen Schaftendes eine Vorspannung ausgelöst. Diese Vorspannung bewirkt gleichfalls eine vorgespannte, spielfreie Anlage des Mitnehmers an der Schaltwelle bzw. der Schaltstange und führt zu einer zuverlässigen, dauerhaften Befestigung, die auch einer Wechselbeanspruchung standhält.

Die Befestigungsart führt dabei nicht zu einer nachteiligen Verformung der Schaltwelle oder der Schaltstange. Folglich können mit dieser erfindungsgemäßen Verstiftung auch fertig bearbeitete Bauteile zu einer Einheit zusammengefügt werden, unter Beibehaltung der geforderten Fertigungsgüte für das komplette Betätigungselement. In vorteilhafter Weise kann die beanspruchte Befestigung durch eine Schweißvorrichtung bzw. durch Automaten kostengünstig hergestellt werden und besitzt daher einen Kostenvorteil. Weiterhin ist die erfindungsgemäße Befestigungsart gegenüber bisherigen Lösungen bauraumneutral und ist folglich austauschbar.

Weitere vorteilhafte Ausgestaltungen der Erfindung sind Gegenstand der Ansprüche 2 bis 7, die nachfolgend erläutert werden.

Als Verstiftung eignet sich ein in die Aufnahmebohrung eingesetzter Kerbnagel, dessen Kopf an der Schaltwelle oder der Schaltstange abgestützt ist. Die Länge des Kerbnagels ist so gewählt, daß dieser in der Einbaulage bündig mit der Außenkontur des Mitnehmers abschließt oder geringfügig aus dem Mitnehmer hervortritt. Als eine geeignete Maßnahme zur Erzielung eines Preßsitzes des Kerbnagels in der Aufnahmebohrung ist diese geringfügig kleiner ausgelegt als der Durchmesser des Kerbnagels. Dieser Preßsitz ermöglicht einen gewünschten spielfreien Einbau des Kerbnagels in der Schaltwelle bzw. Schaltstange sowie eine Verliersicherung während der Montage.

Zwischen der Bohrung im Mitnehmer zur Aufnahme des Kerbnagels und dem Kerbnageldurchmesser ist vorteilhaft eine Übergangspassung vorgesehen, so daß sich bei einer Montage der bereits in der Schaltwelle bzw. der Schaltstange eingesetzte Kerbnagel bei einem Zusammenfügen mit dem Mitnehmer vor der Schweißung nicht verschiebt. Alternativ schließt die Erfindung eine Spielpassung zwischen dem Kerbnagel und der Bohrung in dem Mitnehmer ein. Ein dabei sich einstellendes Einbauspiel kann dazu benutzt werden, um die Bauteile des Betätigungselements in einer Schweißvorrichtung positionieren zu können.

Zur Optimierung der Schweißverbindung bei einer Übergangspassung schließt die Verbindung eine Fase, Ansenkung bzw. eine Ausnehmung in der Bohrung des Mitnehmers ein. Die Ansenkung ist dabei auf der der Schaltwelle abgewandten Seite vorgesehen. Dieser Freiraum ermöglicht eine optimierte Schweißverbindung, ohne dabei die Außenkontur des Mitnehmers zu beeinflussen. Bei einer Spielpassung zwischen dem Kerbnagel und der Bohrung in dem Mitnehmer kann auf eine solche Ansenkung verzichtet werden, wenn z. B. das Einbauspiel entsprechend groß ist.

Die Wirksamkeit der erfindungsgemäßen Verstiftung kann weiterhin verbessert werden, indem die Bauteile des erfindungsgemäßen Betätigungselementes mit mehreren, jeweils winkelversetzt zueinander angeordneten Verstiftungen verbunden sind. Als ein für die erfindungsgemäße Befestigung geeignetes Schweißverfahren ist vorzugsweise ein Schutzgas-Schweißverfahren vorgesehen, wie z. B. ein MAG (Metall-Aktiv-Gas)-Verfahren.

### Kurze Beschreibung der Zeichnungen

Zur weiteren Erläuterung der Erfindung sei auf die Zeichnungen verwiesen, in denen ein Ausführungsbeispiel dargestellt ist. Es zeigen:
- Figur 1: in einer Ansicht das erfindungsgemäße Betätigungselement, das eine Schaltwelle und einen Mitnehmer umfaßt;
- Figur 2: einen Abschnitt aus dem Mitnehmer gemäß Figur 1 in einem vergrößerten Maßstab;
- Figur 3: die Schnittansicht gemäß der Linie 3-3 aus der Figur 2.

### Detaillierte Beschreibung der Zeichnungen

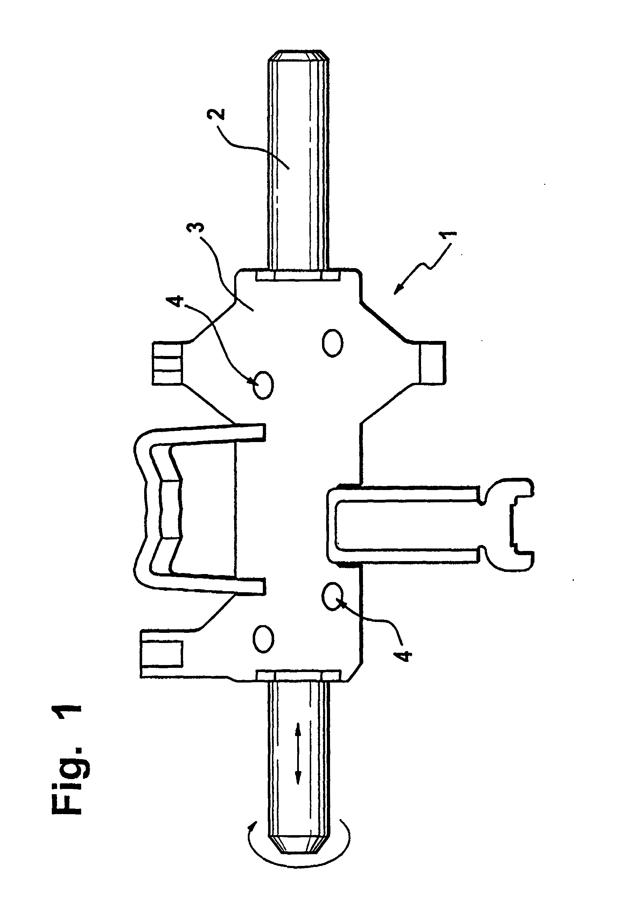

In Figur 1 ist das Schaltelement 1 abgebildet, bestehend aus einer axial verschiebbaren und verdrehbaren Schaltwelle 2 sowie einem Mitnehmer 3. Der spanlos, beispielsweise als Stanzteil oder Tiefziehteil hergestellte Mitnehmer 3 ist jeweils beidseitig beabstandet von den Enden der Schaltwelle 2 mit dieser verstiftet. Dazu sind insgesamt vier jeweils winkelversetzt zueinander angeordnete Verstiftungen 4 vorgesehen.

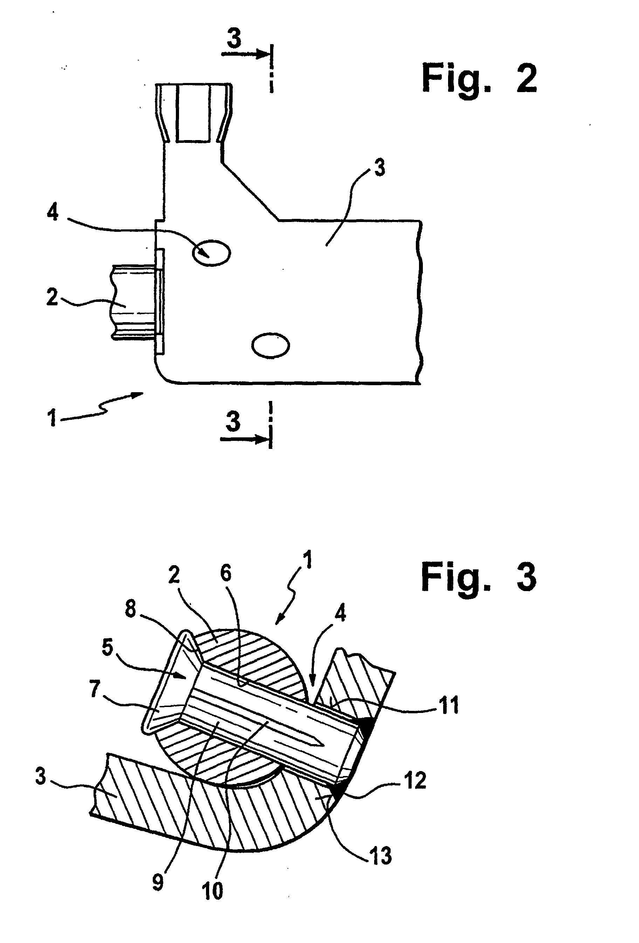

Die Figuren 2 und 3 zeigen Einzelheiten des Schaltelements 1 in einem vergrößerten Maßstab und verdeutlichen damit die Befestigung des Mitnehmers 3 an der Schaltwelle 2. Die Verstiftung 4 in einer Schnittansicht zeigt die Figur 3. Danach ist ein Kerbnagel 5 in eine Aufnahmebohrung 6 des Mitnehmers 3 eingesetzt, dessen kegelig gestalteter Kopf 7 in eine entsprechend konische Ansenkung 8 der Aufnahmebohrung 6 eingepreßt ist. Umfangsverteilt auf der Mantelfläche des Schafts 9 ist der Kerbnagel 5 mit Längskerben 10 versehen, die jeweils radiale Aufwerfungen bilden und damit aus der Mantelfläche des Schafts 9 radial hervortreten. Zwischen dem Durchmesser des Kerbnagels 5 und der Aufnahmebohrung 6 besteht eine Überdeckung, so daß der Kerbstift 5 spielfrei in der Schaltwelle 2 eingepreßt ist. Eine Bohrung 11 ist so im Mitnehmer 3 eingebracht, daß sich die Schaltwelle 2 in der Einbaulage weitestgehend an zwei nahezu 90° versetzten Anlenkpunkte abstützt.

Der Mitnehmer 3 verfügt über eine Bohrung 11, in die das Schaftende des Kerbnagels 5 eingesetzt ist. Zwischen dem Durchmesser der Bohrung 11 und dem Kerbnagels 5 ist ein Einbauspiel vorgesehen, mit dem eine genaue Positionierung, d. h. Zweipunktanlage der Schaltwelle 2 am Mitnehmer 3 erreichbar ist. Zur unlösbaren, stoffschlüssigen Befestigung des Kerbnagels 5 am Mitnehmer 3 sind diese Bauteile durch eine Verschweißung stoffschlüssig verbunden. Das Einbauspiel zwischen dem Kerbnagel 5 und der Bohrung 11 im Mitnehmer 3 ermöglicht eine Ausrichtung bzw. Positionierung der Schaltwelle 2 zu dem Mitnehmer 3 vor der Schweißung. Zur Erzielung einer ausreichend dimensionierten Schweißnaht 12 ist das Ende der Bohrung 11 mit einer konischen Ansenkung 13 versehen. Die Schweißung sorgt für eine dauerhafte vorgespannte Befestigung des Kerbnagels 5, da sich nach dem Erkalten der Schweißung das Längenmaß des Kerbnagels 5 verringert. Für die Schweißung eignet sich ein Schutzgas-Schweißverfahren vorzugsweise ein (MAG) Metall-Aktivgas-Schweißverfahren. Bedingt durch die Ansenkung 13 im Mitnehmer 3 überragt die Schweißnaht 12 nicht die Außenkontur des Mitnehmers 3.

### Bezugszahlenliste

- 1: Schaltelement
- 2: Schaltwelle
- 3: Mitnehmer
- 4: Verstiftung
- 5: Kerbnagel
- 6: Aufnahmebohrung
- 7: Kopf
- 8: Ansenkung
- 9: Schaft
- 10: Längskerben
- 11: Bohrung
- 12: Schweißnaht
- 13: Ansenkung

## Patentansprüche

1. Betätigungselement für eine Schaltung eines Zahnräderwechselgetriebes von Fahrzeugen, das eine axial verschiebbare und verdrehbare Schaltwelle (2) aus Stahl umfaßt, an der zumindest ein aus Metall hergestellter Mitnehmer (3) drehstarr angeordnet ist, wobei die Schaltwelle (2) mit dem Mitnehmer (3) durch eine Verstiftung (4) spielfrei zusammengefügt ist, und ein in einer Bohrung (11) des Mitnehmers (3) geführtes Schaftende der Verstiftung (4) bündig mit einer Außenkontur des Mitnehmers (3) abschließt, dadurch gekenngeichnet, daß für Verstiftung ein Kerbnagel (5) mit einem Schaftbereich in eine Aufnahmebohrung (6) der Schaltwelle (2) eingepaßt ist, dessen Kopf (7) sich an der Schaltwelle (2) abstützt, und daß der Kerbnagel (5) durch eine Verschweißung mit dem Mitnehmer (3) gesichert ist.

2. Betätigungselement nach Anspruch 1, wobei der Kerbnagel (5) mit einer Überdeckung, bzw. einem Übermaß in die Aufnahmebohrung (6) der Schaltwelle (2) eingepreßt ist.

3. Betätigungselement nach Anspruch 1, wobei eine Übergangspassung zwischen der Bohrung (11) im Mitnehmer (3) und dem Kerbnagel (5) vorgesehen ist.

4. Betätigungselement nach Anspruch 1, dessen Kerbnagel (5) in eine den Durchmesser des Kerbnagelschafts übertreffende Bohrung (11) des Mitnehmers (3) eingesetzt ist (Figur 3).

5. Betätigungselement nach Anspruch 1, wobei die Bohrung (11) im Mitnehmer (3) an der der Schaltwelle (2) abgewandten Seite eine Ansenkung (13) aufweist.

6. Betätigungselement nach Anspruch 1, dessen der Mitnehmer (3) mit mehreren winkelversetzt zueinander angeordneten Verstiftungen (4) an der Schaltwelle (2) befestigt ist

7. Betätigungselement nach Anspruch 1, wobei zur Verschweißung des Kerbnagels (5) mit dem Mitnehmer (3) ein Schutzgas-Schweißverfahren vorgesehen ist.

## Claims

1. Control element for shifting gears in a manual transmission of vehicles, which control element comprises an axially displaceable and rotatable gearshift shaft (2) made of steel on which at least one driver (3) made of metal is arranged non-rotatably, the gearshift shaft (2) being connected without play to the driver (3) by a pin connection (4), and a shank end of the pin connection (4) inserted into a bore (11) of the driver (3) ends flush with an outer contour of the driver (3), **characterised in that,** for making the pin connection, a notched pin (5) is fitted with a shank region into a reception bore (6) of the gearshift shaft (2), the head (7) of the notched pin (5) is supported on the gearshift shaft (2), and the notched pin (5) is secured on the driver (3) by welding.

2. Control element according to claim 1, wherein the notched pin (5) is pressed into the reception bore (6) of the gearshift shaft (2) with an overlap or an overdimension.

3. Control element according to claim 1, wherein a transition fit is provided between the bore (11) in the driver (3) and the notched pin (5).

4. Control element according to claim 1, wherein the notched pin (5) is inserted into a bore (11) of the driver (3), the diameter of which bore is larger than the diameter of the shank of the notched pin (figure 3).

5. Control element according to claim 1, wherein the bore (11) in the driver (3) comprises a counterbore (13) on the side turned away from the gearshift shaft (2).

6. Control element according to claim 1, wherein the driver (3) is fixed on the gearshift shaft (2) by a plurality of angularly offset pin connections (4).

7. Control element according to claim 1, wherein the notched pin (5) is welded to the driver (3) by a gas shielded arc welding method.

## Revendications

1. Elément de commande pour changer de vitesse dans une transmission manuelle de véhicules, lequel élément comprend un arbre rotatif de changement de vitesse (2) en acier qui est monté en déplacement axial et sur lequel au moins un entraîneur (3) métallique est agencé fixe en rotation, ledit arbre de changement de vitesse (2) étant relié sans jeu à l'entraîneur (3) par une liaison à goupille (4), pendant qu'une extrémité de la tige de la liaison à goupille guidée dans un alésage (11) de l'entraîneur (3) est à fleur d'un contour extérieur de l'entraîneur (3), **caractérisé en ce que,** pour faire la liaison à goupille, une région de la tige d'une goupille entaillée (5) est emboîtée dans un alésage de réception (6) de l'arbre de changement de vitesse (2), la tète (7) de la goupille entaillée (5) se supporte sur l'arbre de changement de vitesse (2), et la goupille entaillée (5) est fixée sur l'entraîneur (3) par soudage.

2. Elément de commande selon la revendication 1, dans lequel la goupille entaillée (5) est enfoncée à chevauchement ou à surmesure dans l'alésage de réception (6) de l'arbre de changement de vitesse (2).

3. Elément de commande selon la revendication 1, dans lequel un ajustement de transition est prévu entre l'alésage (11) dans l'entraîneur (3) et la goupille entaillée (5).

4. Elément de commande selon la revendication 1, dans lequel la goupille entaillée (5) est insérée dans un alésage (11) de l'entraîneur (3), le diamètre dudit alésage étant supérieur au diamètre de la tige de la goupille entaillée (figure 3).

5. Elément de commande selon la revendication 1, dans lequel l'alésage (11) dans l'entraîneur (3) comprend, du côté détourné de l'arbre de changement de vitesse (2), une contre-dépouille (13).

6. Elément de commande selon la revendication 1, dans lequel l'entraîneur (3) est fixé sur l'arbre de changement de vitesse (2) par une pluralité de liaisons à goupille (4) qui sont angulairement décalées l'une de l'autre.

7. Elément de commande selon la revendication 1, dans lequel la goupille entaillée (5) est soudée à l'entraîneur (3) par un procédé de soudage à l'arc sous protection gazeuse.
